# FASCICULE DE BREVET EUROPEEN

(11) **EP 1 739 813 B1**
(45) Date de publication et mention de la délivrance du brevet: **18.01.2012**
(21) Numéro de dépôt: 06116329.1
(22) Date de dépôt: 29.06.2006
(51) Int. Cl.: H02K 35/00

(54) **Dispositif de récupération d'énergie mécanique à raideur variable**
Vorrichtung zur mechanischen Energierückgewinnung mit veränderlicher Steiffigkeit
Mechanical energy recovery apparatus with variable stiffness

(30) Priorité: 30.06.2005 FR 0551851
(43) Date de publication de la demande: 03.01.2007
(73) Titulaire: Commissariat à l'Énergie Atomique et aux Énergies Alternatives, 75015 Paris (FR)
(72) Inventeur: Jager, Thomas, 38000, Grenoble (FR); Chaillout, Jean-Jacques, 38960, Saint-Etienne-de-Crossey (FR); Despesse, Ghislain, 07130, Saint-Romain-de-Lerps (FR); Vassilev, Andréa, 38000, Grenoble (FR)
(74) Mandataire: Dages, Olivier Pierre Arthur

(56) Documents cités:
- WO-A-2005/031952
- WO-A-2005/057760
- DE-A1- 10 147 720
- GB-A- 2 155 586
- GB-A- 2 311 171
- US-A- 3 778 697
- US-A- 4 719 376
- US-A1- 2004 061 412

## Description

### DOMAINE TECHNIQUE

La présente invention concerne les systèmes capables de récupérer de l'énergie provenant des mouvements de leur environnement (vibrations, chocs, écoulements,...) et basés sur le principe d'une masse en suspension effectuant des mouvements relatifs par rapport à cet environnement.

Plus spécifiquement, afin de s'adapter à des environnements non figés en termes d'amplitudes de vibration et/ou déformation, l'invention se rapporte à des systèmes récupérateurs dans lesquels les moyens de liaison de la masse en suspension avec la partie fixe réagissent de façon non linéaire à une sollicitation ; en particulier, les deux parties mobiles relativement sont reliées par des ressorts à raideur variable.

### ÉTAT DE LA TECHNIQUE ANTÉRIEURE

Le principe de la génération d'énergie par mouvement relatif entre deux dispositifs est connu par exemple du document EP-A-0 008 237. Il a été appliqué pour la récupération de l'énergie d'un système mobile, par exemple dans le document GB-A-2 311 171 : un socle, généralement externe, est fixé rigidement (vissage, collage,...) à un support en mouvement, et une partie mobile, généralement interne, est reliée au socle fixe par une liaison souple. La partie mobile, en suspension, effectue du fait de son inertie un déplacement relatif par rapport à la partie fixe, donc au support ; un convertisseur transforme l'énergie mécanique récupérée en toute forme d'énergie voulue (électrique, thermique, mécanique,...), en utilisant tout type de conversion. Par exemple, dans le cas des convertisseurs électriques, le principe de conversion peut être électromagnétique, capacitif, électrostatique, piézoélectrique, ou autre.

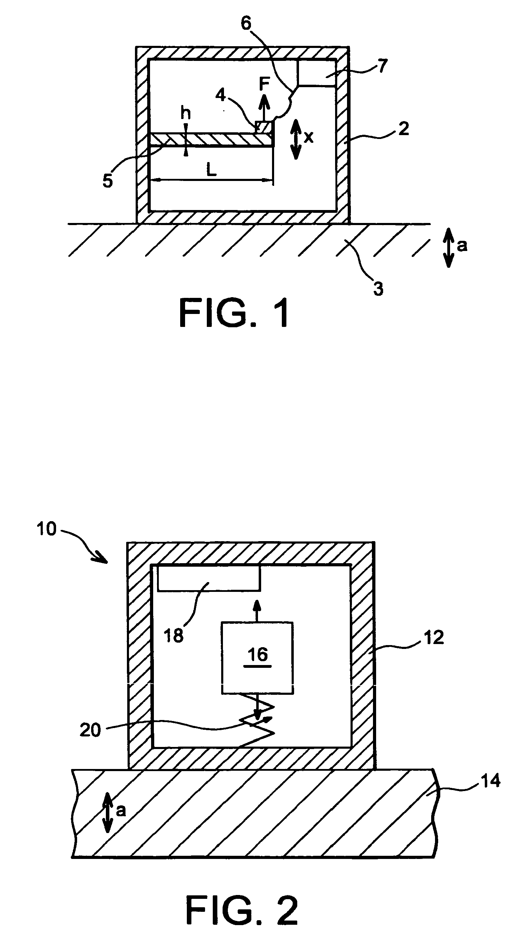

La figure 1 illustre ainsi un exemple particulier concernant une conversion de l'énergie mécanique en énergie électrique par principe piézoélectrique. Le dispositif 1 comprend un boîtier 2 fixé à un support 3 qui subit des vibrations. A l'intérieur du boîtier 2 est localisé un système de conversion d'énergie consistant en une masselotte 4 reliée de façon mobile au boîtier 2 par une poutre 5 réalisée au moins partiellement en matériau piézoélectrique ; la poutre est solidarisée de façon fixe (encastrée) à sa première extrémité au boîtier 2, et libre à sa deuxième extrémité. Le déplacement relatif de la masselotte 4 par rapport au boîtier 2 modifie la valeur piézoélectrique de la poutre 5, et l'énergie électrique ainsi générée peut être transmise à un système d'exploitation 7 par l'intermédiaire d'une connectique 6.

Dans les structures classiques, les moyens de liaison souple sont dimensionnés pour réagir de façon optimale pour une certaine gamme de vibrations : on utilise en général la déformation élastique d'éléments mécaniques, par exemple des poutres, des ressorts ou des membranes, dans leur domine de déformation linéaire. Les éléments de connexion sont ainsi choisis de façon appropriée en fonction de l'amplitude de vibration et de déformation attendue de l'environnement. En particulier, la déformation des moyens de liaison est directement proportionnelle à la force appliquée, c'est-à-dire à l'accélération du mouvement du dispositif.

Par exemple, pour la poutre 5 encastrée et guidée de la figure 1, la relation entre le déplacement x de l'extrémité 4 de la poutre et la force appliquée F à son extrémité 4 guidée est donnée par, avec L longueur de la poutre 5, E son module d'Young et I son moment d'inertie par rapport à son axe de flexion.

Le brevet US 3,778,697 divulgue un solénoïde générateur pour la conversion d'énergie mécanique en énergie électrique comprenant, en tant que moyens de conversion d'énergie mécanique, une première partie 76 solidaire d'un environnement à déformations, une deuxième partie 70, 74, les deux parties étant mobiles l'une par apport à l'autre. Des moyens 72, sous la forme d'un ressort, sont prévus pour relier la première partie 76 à la deuxième partie 70, 74.

Selon ce brevet, une augmentation du déplacement de l'environnement 76 engendre une diminution de la raideur du ressort 72.

Il apparaît rapidement que ce type de structure devient inefficace, voire inutilisable, pour dcs environnements où les paramètres diffèrent des prévisions : dans l'exemple précédent, une amplitude de déformation et une accélération trop importantes se traduisent par un déplacement de l'extrémité 4 tel qu'elle peut venir en butée sur le boîtier 2, constituant ainsi une limite physique au déplacement. Une énergie importante est par ailleurs dissipée au cours des chocs, pouvant aller jusqu'à la dégradation irréversible du système de conversion.

### EXPOSÉ DE L'INVENTION

L'invention se propose de pallier ces inconvénients des dispositifs existants et, entre autres avantages, de s'affranchir des contraintes relatives à l'environnement. L'invention permet ainsi d'augmenter le champ d'application d'un dispositif de récupération d'énergie déterminé dont le dimensionnement est figé.

L'invention concerne à cette fin l'introduction d'éléments présentant un comportement mécanique non linéaire, en particulier une raideur variable, comme décrit dans les revendications 1 ou 7. Outre un domaine d'application accru, les structures de récupération d'énergie selon l'invention peuvent être dimensionnées de façon à réduire significativement leur encombrement.

Sous l'un de ses aspects, l'invention concerne un dispositif de récupération d'énergie comprenant deux parties reliées de façon mobile l'une par rapport à l'autre, une des parties pouvant être connectée de façon rigide à un support dont l'énergie est récupérée. Avantageusement, des moyens de conversion de l'énergie issue du mouvement relatif des deux parties sont associés, de préférence comprenant un élément électronique d'exploitation de l'énergie électrique. La géométrie du dispositif comprend de préférence un boîtier dans lequel est localisée une partie mobile relativement, en suspension ; soit le boîtier, soit la partie en suspension peuvent être connectés de façon rigide à un support.

Les moyens de liaison souple entre les deux parties sont tels que leur déformation suite à une sollicitation mécanique est non linéaire sur une plage d'utilisation, et notamment croissante. En particulier, les moyens de liaison souple peuvent consister en un élément faisant ressort et avoir une raideur variable. Il est possible également d'associer un élément faisant ressort, de raideur constante, variable ou combinant les deux caractéristiques, à un élément répulsif.

De cette façon, lorsque l'amplitude de vibrations d'un environnement auquel est associé le dispositif lors de son utilisation dépasse une certaine valeur, la raideur de la liaison souple croît rapidement, et le déplacement de la partie mobile ne suit plus un profil linéaire : il est possible de disposer d'un dispositif de dimensions inférieures aux dimensions usuelles. Il est à noter que l'utilisation de la propriété de réaction non linéaire à cette fin n'est pas connue.

Sous un autre aspect, l'invention se rapporte à un procédé de récupération d'énergie issue d'un environnement dans lequel un dispositif comprenant deux parties reliées l'une à l'autre par une liaison souple est solidarisé par une des deux parties à l'environnement, et dans lequel la deuxième partie du dispositif est mise en mouvement par l'impression de vibrations ou déformations d'une première amplitude à l'environnement, le procédé étant tel que la première amplitude sorte du domaine de linéarité de la liaison souple de connexion. La liaison peut comprendre des moyens faisant ressort, associés ou non à un élément répulsif.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.

La figure 1, déjà décrite, illustre un dispositif connu de récupération d'énergie mécanique par principe piézoélectrique.

La figure 2 montre un dispositif selon l'invention.

Les figures 3A et 3B schématisent les avantages obtenus grâce à un dispositif selon l'invention.

Les figures 4A et 4B montrent un autre mode de réalisation d'un dispositif selon l'invention.

### EXPOSÉ DÉTAILLÉ DE MODES DE RÉALISATION PARTICULIERS

Un dispositif 10 selon l'invention, illustré par exemple en figure 2, comprend, tel qu'usuel, une partie fixe 12 reliée à la source d'énergie mécanique, ici un support 14 subissant des vibrations, une partie mobile 16 et des éléments 18 convertisseurs d'énergie : du fait de son inertie, la partie mobile 16 est mise en mouvement relatif par rapport à la partie fixe 12 dès que cette dernière est soumise à une accélération extérieure, exercée sur le support 14 (double flèche) ; l'énergie de ce mouvement est transformée et récupérée grâce aux éléments de conversion d'énergie mécanique 18.

Les éléments 18 de conversion peuvent être basés sur différents principes, par exemple les conversions électrostatique, électromagnétique, piézoélectrique ou magnétostrictive, illustrés notamment dans le document FR 2 872 868.

Les parties fixe 12 et mobile 16 sont reliées par une liaison souple 20. Pour accroître la plage de fonctionnement du dispositif 10, la présente invention propose de choisir comme liaison souple des éléments 20 ne répondant pas linéairement aux sollicitations de déplacement, en particulier des éléments à raideur mécanique croissante.

Ainsi, dans le cadre de l'invention, comme les moyens mécaniques souples 20 ont une raideur mécanique croissante en fonction de l'amplitude du mouvement de la partie mobile 16 par rapport à la partie fixe 12, de fortes accélérations extérieures peuvent être absorbées sans dommages par la structure 10, les liaisons mécaniques 20 se raidissant de plus en plus à mesure que l'amplitude du mouvement croît et le déplacement ainsi engendré ralentissant. Selon l'invention, les moyens non linéaires sont partie intégrante du dispositif 10, et non des moyens d'absorption de choc ajoutés, en ce qu'ils remplacent le ressort classique de liaison.

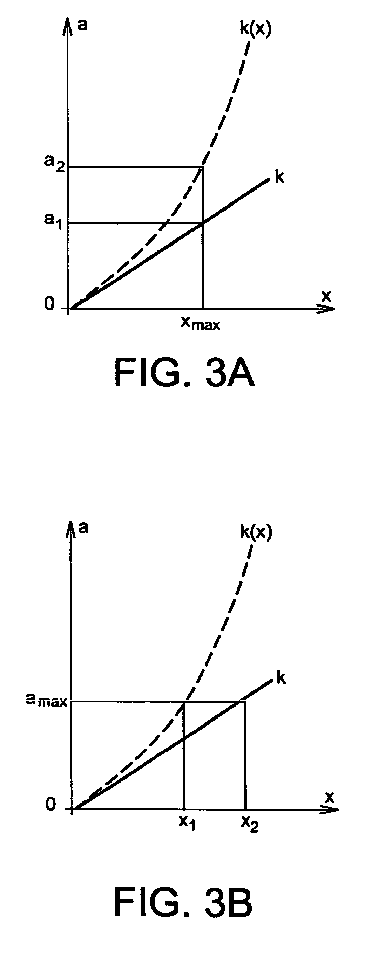

Deux effets peuvent notamment être dérivés de cette sélection pour les éléments de liaison 20. Comme le montre la figure 3A, pour un dispositif 10 dont une amplitude de déplacement maximale Xₘₐₓ de la partie mobile 16 par rapport à la partie fixe 12 est fixée, par exemple en raison d'une butée possible de la partie mobile 16 sur la partie fixe 12, la plage de fonctionnement du dispositif de récupération d'énergie mécanique 10 est accrue par rapport à une structure 1 utilisant des liaisons mécanique à raideur constante k : l'accélération de l'environnement 14 maximale admissible avant butée passe de a₁ à a₂.

Inversement, comme montré sur la figure 3B, pour un environnement 14 dont on peut déterminer une plage de fonctionnement qui donne une accélération maximale aₘₐₓ, il devient possible de réduire l'encombrement de la structure 10 du fait de la diminution de l'amplitude du mouvement relatif x qui décroît de x₂ à x₁ grâce l'utilisation de la liaison mécanique à raideur variable k(x).

Les éléments mécaniques 20 à raideur variable k(x) peuvent être réalisés de plusieurs manières. Par exemple, il est possible de réaliser un dimensionnement mécanique adéquat des moyens de liaison souple 20 permettant d'exploiter le domaine de déformation non linéaire de leur matériau.

En ce qui concerne des éléments de déformation simples comme par exemple des poutres ou des membranes, on considère ainsi habituellement que l'on sort du domaine de déformation linéaire dès que la déformation imposée devient supérieure à l'épaisseur h de la structure déformée 20 : pour une poutre encastrée et guidée telle qu'illustrée en figure 1, la raideur k(x) croît rapidement avec la déformation dès que le déplacement x en extrémité 4 excède l'épaisseur h de la poutre 5. Ainsi, selon l'invention, il est possible de choisir une poutre 20 dont l'épaisseur h est inférieure aux déplacements prévisibles.

Inversement, il est possible, pour un dispositif 10 prédéterminé, de l'utiliser dans un environnement 14 tel que les vibrations engendrent des oscillations d'amplitude x supérieure à l'épaisseur h. Une autre option est d'utiliser des éléments faisant ressort 20 hors de leur domaine d'élasticité linéaire.

Ces éléments à raideur variable peuvent être réalisés de manières multiples. Dans le cadre d'un système macroscopique de quelques centimètres cube, des poutres utilisées en tant que ressort peuvent par exemple être réalisées par découpe par électroérosion dans un matériau conducteur (par exemple en tungstène, ou en or, ou en acier) en même temps que l'ensemble de la structure de conversion d'énergie mécanique en énergie électrique. Pour un système de conversion microscopique réalisé grâce aux technologies de la microélectronique, les éléments ressort, communément des poutres ou des membranes, peuvent être réalisés par exemple en silicium, celui-ci étant gravé par différentes techniques (gravure sèche DRIE ou humide par exemple) selon un masque bien défini.

Leur dimension typique est de l'ordre du µm. C'est donc pour des déformations de plusieurs fois leur épaisseur (plusieurs µm) que leur raideur est non linéaire)

Par ailleurs, il est possible de choisir pour le dispositif 10 une liaison souple comprenant un élément faisant ressort dont la raideur croît avec le déplacement, en particulier sur toute la gamme de sollicitations, de façon régulière si possible. Diverses options sont présentées dans le document US 2004/061412.

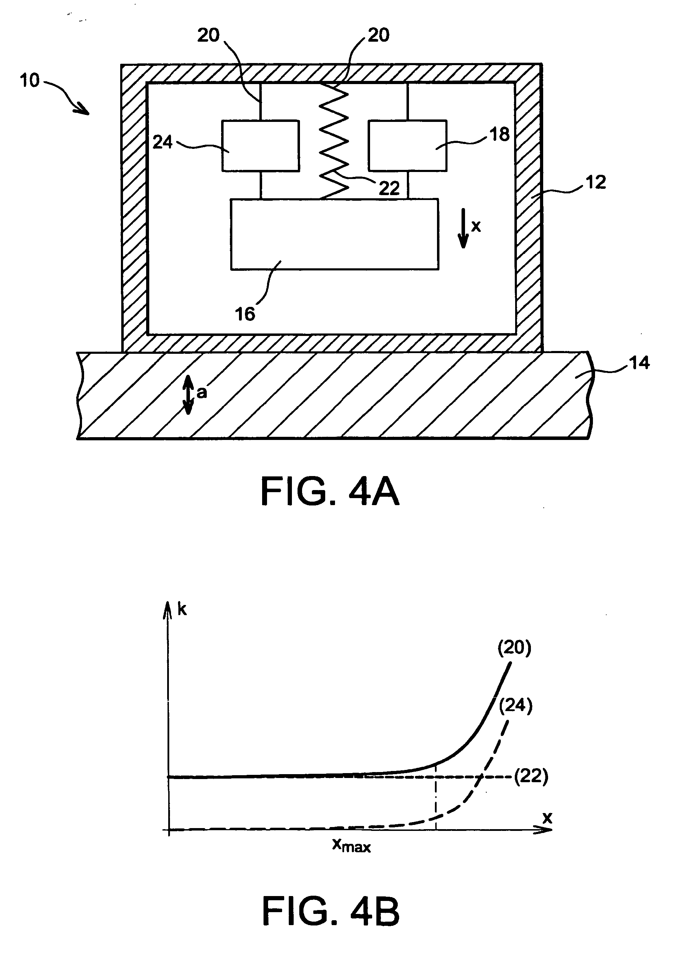

Un autre mode de réalisation pour la liaison mécanique souple à raideur variable 20 est l'utilisation d'un moyen usuel, des moyens faisant ressort 22 par exemple, combinés avec au moins un élément supplémentaire 24 qui va agir en répulsion lorsque l'on va se rapprocher de l'amplitude maximale xₘₐₓ de déformation admise : voir figures 4A et 4B. La raideur apparente k des moyens de liaison souple 20 est la somme des raideurs issues de l'élément faisant ressort 22, et des éléments répulsifs 24, ces dernières croissant avec le déplacement.

L'élément répulsif 24 peut être basé sur différents principes. Par exemple, l'élément 24 peut imprimer une répulsion entre les éléments fixe 12 et mobile 16 au voisinage de xₘₐₓ à l'aide de forces d'origine électrostatique, électromagnétique, piézoélectrique, hydraulique, pneumatique, ou mixte.

Par exemple des éléments répulsifs magnétiques peuvent être reportés sur la structure de conversion, comme des aimants placés ou collés sur les parties fixes et mobiles de la structure et qui se font face par des pôles de même nature (N ou S). Ainsi plus ces éléments se rapprocheront, plus la force de répulsion s'exerçant entre eux sera importante. Celle-ci, combinée à la force de rappel purement mécanique, permet de constituer globalement un élément de déformation à raideur variable.

On peut aussi envisager par exemple, l'utilisation de matériau piézoélectrique dans les éléments de déformation mécanique de la structure (par exemple dans le cas de microstructures, on peut réaliser un film de matériau piézoélectrique recouvrant des éléments de déformation mécanique comme des poutres ou des membranes). Au cours de la déformation, il suffit alors de charger l'élément piézoélectrique de telle manière que celui-ci soit soumis à une force piézoélectrique opposée au mouvement de la structure (on peut le charger par exemple quand la déformation dépasse une valeur donnée, proche de l'amplitude maximale de déformation admissible par la structure mécanique). Cette force piézoélectrique venant s'ajouter à un moment opportun à la force de rappel purement mécanique, on peut réaliser de cette manière un élément de déformation mécanique à raideur variable en fonction de l'amplitude de déplacement.

Naturellement, il est possible de combiner les deux modes de réalisation, et par exemple d'ajouter un élément répulsif 24 à des moyens de liaison dimensionnés de sorte que la raideur ne soit pas constante dans la gamme de vibrations, afin d'associer à l'effet de seuil de l'élément répulsif 24 un fonctionnement en domaine de déformation non linéaire.

Bien que décrits dans la configuration classique, il est possible d'associer la liaison à raideur mécanique variable selon l'invention à une configuration « inversée » au niveau des masses du dispositif de récupération d'énergie telle que décrite dans le document FR 2 872 868 : dans cette dernière configuration, le boîtier 12 constitue la partie mobile, et la deuxième partie 16 est connectée par une liaison rigide traversant le boîtier 12 au support 14.

Grâce à l'utilisation de liaisons souples à raideur mécanique variable selon l'invention, il est possible de réaliser des systèmes de récupération d'énergie mécanique de vibration plus compacts, avec une plage d'utilisation élargie, et une robustesse accrue par rapport aux systèmes existants. En particulier, l'effet de non linéarité, exploité de manière continue, permet d'accroître la plage de fonctionnement du système pour récupérer de façon plus efficace l'énergie des mouvements de basse fréquence et/ou d'amplitude élevée.

## Revendications

1. Dispositif (10) de récupération d'énergie mécanique à partir d'un environnement (14) en mouvement de vibrations et/ou déformations, ledit dispositif comprenant des moyens de conversion d'énergie mécanique comprenant une première et une deuxième parties (12, 16) mobiles l'une par rapport à l'autre et des moyens (20) pour relier de façon mobile la première à la deuxième partie, dans lequel les moyens (20) ont un taux de déformation en fonction de l'effort appliqué non linéaire sur une plage d'utilisation correspondant à l'environnement en mouvement, **caractérisé en ce que** la raideur mécanique k(x) des moyens est croissante en fonction de l'effort.

2. Dispositif selon la revendication 1 **caractérisé en ce que** les moyens consistent en un élément (20) faisant ressort de raideur croissante en fonction de l'effort.

3. Dispositif selon la revendication 1 ou 2 **caractérisé en ce que** la première partie (12) est fixe et reliée à l'environnement, la deuxième partie (16) est mobile et les moyens (20) consistent en une liaison souple (22).

4. Dispositif selon l'une des revendications 1 à 3 **caractérisé en ce que** les moyens consistent en un élément faisant ressort (22) de raideur constante, variable ou combinant les deux caractéristiques associé à au moins un élément pouvant exercer une force de répulsion (24).

5. Dispositif selon la revendication 4, **caractérisé en ce que** lorsque l'amplitude de vibrations de l'environnement auquel est associé le dispositif lors de son utilisation dépasse une certaine valeur (xmax), la raideur de la liaison souple croît rapidement par action de l'élément répulsif, et le déplacement de la partie mobile (16) ne suit plus un profil linéaire, la force de rappel subie par la partie mobile augmentant de manière significative.

6. Dispositif selon la revendication 4, **caractérisé en ce que** la raideur apparente k de la liaison souple (20) est la somme des raideurs issues de l'élément faisant ressort (22) et des éléments répulsifs (24), la raideur de ces derniers croissant avec le déplacement de la partie mobile (16).

7. Dispositif selon l'une des revendications 4 à 6, **caractérisé en ce que** les éléments répulsifs sont constitués par des aimants placés ou collés sur les parties fixes et mobiles et qui se font face par des pôles de même nature (N ou S).

8. Dispositif selon l'une des revendications 4 à 6, **caractérisé en ce que** l'élément répulsif est constitué par un film de matériau piézoélectrique recouvrant la liaison souple (20).

9. Dispositif selon l'une des revendications précédentes, **caractérisé en ce que** les moyens de liaison sont constitués par une poutre encastrée et guidée, dont la raideur k(x) croit rapidement avec la déformation dès que l'amplitude du déplacement de la poutre excède l'épaisseur h de la poutre.

10. Dispositif selon l'une des revendications 1 à 9 comprenant en outre des éléments convertisseurs (18) de l'énergie issue du mouvement relatif des première et deuxième parties (12, 16).

11. Dispositif selon l'une des revendications 1 à 10 dans lequel l'une des première et deuxième parties est un boîtier (12) dans lequel est logé l'autre des première et deuxième parties (16).

12. Dispositif selon la revendication 11 comprenant des moyens traversant le boîtier (12) pour connecter de façon rigide l'autre des première et deuxième parties à un support (14).

13. Procédé de récupération de l'énergie mécanique d'un environnement, comprenant :
- le positionnement d'un dispositif (10) comprenant deux parties (12, 16) mobiles relativement l'une par rapport à l'autre, de façon à ce que l'une des parties (12) soit solidaire de l'environnement (14), les deux parties (12, 16) du dispositif étant reliées l'une avec l'autre par des moyens de liaison souple (20) de raideur mécanique k(x) croissante en fonction de l'effort ;
- la mise en mouvement de l'environnement (14) par des vibrations et/ou déformations d'une première amplitude ;
de sorte que la raideur mécanique k(x) des moyens de liaison (20) augmente avec la force générée par la première amplitude.

14. Procédé selon la revendication 13 dans lequel les moyens de liaison souple (20) comprennent un élément faisant ressort dont la raideur mécanique k(x) est croissante en fonction de l'effort.

15. Procédé selon la revendication 13 ou 14 dans lequel les moyens de liaison souple (20) consistent en un élément faisant ressort (22) de raideur constante, variable ou combinant les deux caractéristiques associé à au moins un élément pouvant exercer une force de répulsion (24).

## Claims

1. Device (10) for recovery of mechanical energy from vibrations and/or deformations of a moving environment (14), said device comprising means for converting mechanical energy comprising a first part and a second part (12, 16) free to move with respect to each other and means (20) for connecting the first part to the second part in a mobile manner, wherein the means (20) have a deformation ratio as a function of the applied force non-linear over a use range corresponding to the moving environment, **characterized in that** the mechanical stiffness k(x) of the means increases as a function of the applied force.

2. Device according to claim 1 **characterized in that** the means consist in a spring-like element (20) with increasing stiffness as a function of the applied force.

3. Device according to one of claims 1 or 2, **characterized in that** the first part (12) is fixed and linked to the environment (14), the second part (16) is mobile and the means (20) consist in a flexible link.

4. Device according to one of claims 1 to 3 **characterized in that** the means consist in a spring-like element (22) with a constant or variable stiffness or combines the two characteristics associated to at least one element that can apply a repulsion force (24).

5. Device according to claim 4 **characterized in that** when the vibration amplitude of the environment with which the device is associated during use exceeds a certain value (xₘₐₓ), the stiffness of the flexible link quickly increases by the action of the repulsive element and the displacement of the mobile part no longer follows a linear profile, the restoring force incurred by the mobile part increasing significantly.

6. Device according to claim 4 **characterized in that** the apparent stiffness k of the flexible link (20) is the sum of stiffnesses output from the spring-like element (22) and repulsive elements (24), the stiffness of these latter increasing with the displacement of the mobile part (16).

7. Device according to one of the claims 4 to 6, **characterized in that** repulsive elements are constituted by magnets placed or glued on the fixed and mobile parts and in which poles of the same nature (N or S) are arranged to face each other.

8. Device according to one of the claims 4 to 6, **characterized in that** the repulsive element is constituted by a film of a piezoelectric material covering the flexible link (20).

9. Device according to anyone of the preceding claims, **characterized in that** the link means are constituted by a built-in guided beam, which the stiffness k(x) increases quickly with the deformation as soon as the amplitude of the beam exceeds the thickness h of the beam.

10. Device according to anyone of the claims 1 to 9, further comprising elements (18) for converting the energy output from the relative movement of the first and second parts (12, 16).

11. Device according to one of claims 1 to 10 wherein either the first or second part is a housing (12) containing the other of the first and second parts (16).

12. Device according to claim 11 comprising means passing through the housing (12) so as to rigidly connect the other of the first and second parts to a support (14).

13. Method of recovering mechanical energy from an environment, including:
- placement of a device (10) comprising two parts (12, 16) which move relatively to each other, so that one (12) of the parts is coupled to the environment (14), the two parts (12, 16) in the device being connected to each other by flexible connecting means (20) with increasing mechanical stiffness as a function of the applied force;
- moving of the environment (14) by a first amplitude of vibrations and/or deformations;
such that the mechanical stiffness k(x) of the connecting means (20) increases with the force generated by the first amplitude.

14. Method according to claim 13 wherein the flexible connecting means (20) comprise a spring-like element, with increasing mechanical stiffness k(x) as a function of the applied force.

15. Method according to either claim 13 or 14 wherein the flexible connecting means (20) consist in a spring-like element (22) with a constant or variable stiffness or combines the two characteristics associated to at least one element that can apply a repulsion force (24).

## Patentansprüche

1. Vorrichtung (10) zur Rückgewinnung mechanischer Energie aus einer Umgebung (14) in Vibrations- und/oder Deformationsbewegung, wobei die Vorrichtung Mittel umfasst zur Umwandlung mechanischer Energie, umfassend ein erstes und ein zweites Teil (12, 16), die relativ zueinander beweglich sind, sowie Mittel (20), um das erste Teil beweglich mit dem zweiten zu verbinden, wobei die Mittel (20) eine Verformungsrate als Funktion der ausgeübten Kraft aufweisen, die in einem βenutzungsbereich entsprechend der in Bewegung befindlichen Umgebung nicht linear ist, **dadurch gekennzeichnet, dass** die mechanische Härte k(x) der Mittel als Funktion der Kraft zunimmt.

2. Vorrichtung nach Anspruch 1, **dadurch gekennzeichnet, dass** die Mittel aus einem Element (20) bestehen, das als Feder mit einer als Funktion der Kraft zunehmenden Härte wirkt.

3. Vorrichtung nach Anspruch 1 oder 2, **dadurch gekennzeichnet, dass** das erste Teil (12) fest ist und mit der Umgebung verbunden ist und das zweite Teil (16) beweglich ist und die Mittel (20) aus einer flexiblen Verbindung (22) bestehen.

4. Vorrichtung nach einem der Ansprüche 1 bis 3, **dadurch gekennzeichnet, dass** die Mittel aus einem Element bestehen, das als eine Feder (22) mit konstanter, variabler oder die beiden Eigenschaften kombinierender Härte wirkt, das wenigstens einem Element zugeordnet ist, das eine Rückstoßkraft (24) ausüben kann.

5. Vorrichtung nach Anspruch 4, **dadurch gekennzeichnet, dass** dann, wenn die Amplitude von Schwingungen der Umgebung, der die Vorrichtung bei ihrer Verwendung zugeordnet ist, einen bestimmten Wert (xmax) übersteigt, die Härte der flexiblen Verbindung durch die Wirkung des Rückstoßelements schnell zunimmt und die Verlagerung des beweglichen Teils (16) keinem linearen Profil mehr folgt, wobei die Rückstellkraft, die das bewegliche Teil erfährt, deutlich zunimmt.

6. Vorrichtung nach Anspruch 4, **dadurch gekennzeichnet, dass** die resultierende Härte der flexiblen Verbindung (20) die Summe der Härten ist, die sich aus dem als Feder (22) wirkenden Element und den Rückstoßelementen (24) ergeben, wobei die Härte dieser Letzteren mit der Verlagerung des beweglichen Teils (16) zunimmt.

7. Vorrichtung nach einem der Ansprüche 4 bis 6, **dadurch gekennzeichnet, dass** die Rückstoßelemente durch Magneten gebildet sind, die an den festen und beweglichen Teilen angeordnet oder darauf geklebt sind und einander über Pole der gleichen Art (N oder S) zugewandt sind.

8. Vorrichtung nach einem der Ansprüche 4 bis 6, **dadurch gekennzeichnet, dass** das Rückstoßelement durch eine dünne Schicht aus piezoelektrischem Material gebildet ist, das die nachgiebige Verbindung (20) abdeckt.

9. Vorrichtung nach einem der vorhergehenden Ansprüche, **dadurch gekennzeichnet, dass** die Verbindungsmittel durch einen eingelassenen und geführten Balken gebildet sind, dessen Härte k(x) bei der Verformung schnell wächst, sobald die Amplitude der Verlagerung des Balkens die Dicke h des Balkens übersteigt.

10. Vorrichtung nach einem der Ansprüche 1 bis 9, ferner umfassend Elemente (18) zur Umwandlung der Energie, die aus der Relativbewegung des ersten und des zweiten Teils (12, 16) resultiert.

11. Vorrichtung nach einem der Ansprüche 1 bis 10, wobei das eine von dem ersten und dem zweiten Teil ein Kasten (12) ist, in welchem das andere von dem ersten und dem zweiten Teil (16) aufgenommen ist.

12. Vorrichtung nach Anspruch 11, umfassend Mittel, die den Kasten (12) durchsetzen, um das andere von dem ersten und dem zweiten Teil starr mit einem Träger (14) zu verbinden.

13. Verfahren zur Rückgewinnung mechanischer Energie aus einer Umgebung, umfassend:
- die Positionierung einer Vorrichtung (10) mit zwei Teilen (12, 16), die relativ zueinander beweglich sind, derart, dass das eine der Teile (12) mit der Umgebung (14) verbunden ist, wobei die zwei Teile (12, 16) der Vorrichtung miteinander durch flexible Verbindungsmittel (20) mit einer mechanischen Härte k(x) verbunden sind, die als Funktion der Kraft zunimmt;
- das Inbewegungbringen der Umgebung (14) durch Vibrationen und/oder Deformationen einer ersten Amplitude;
derart, dass die mechanische Härte k(x) der Verbindungsmittel (20) mit der durch die erste Amplitude erzeugten Kraft zunimmt.

14. Verfahren nach Anspruch 13, wobei die flexiblen Verbindungsmittel (20) ein Element umfassen, das als Feder wirkt, deren mechanische Härte k(x) als Funktion der Kraft zunimmt.

15. Verfahren nach Anspruch 13 oder 14, wobei die flexiblen Verbindungsmittel (20) aus einem Element bestehen, das als eine Feder (22) mit konstanter, variabler oder die beiden Eigenschaften kombinierender Härte wirkt, das wenigstens einem Element zugeordnet ist, dass eine Rückstoßkraft (24) ausüben kann.
